# EUROPEAN PATENT SPECIFICATION

(11) **EP 3 061 642 B1**
(45) Date of publication and mention of the grant of the patent: **02.10.2019**
(21) Application number: 14856234.1
(22) Date of filing: 16.10.2014
(51) Int. Cl.: G01C 21/36, B60K 35/00, G09G 5/00, G09G 5/38, B60R 1/00, G09G 3/00, G02B 27/01

(54) **VEHICLE INFORMATION PROJECTION SYSTEM, AND PROJECTION DEVICE**
PROJEKTIONSSYSTEM FÜR FAHRZEUGINFORMATIONEN UND PROJEKTIONSVORRICHTUNG
SYSTÈME DE PROJECTION D'INFORMATIONS DE VÉHICULE, ET DISPOSITIF DE PROJECTION

(30) Priority: 22.10.2013 JP 2013219018; 28.11.2013 JP 2013245739
(43) Date of publication of application: 31.08.2016
(73) Proprietor: Nippon Seiki Co., Ltd., Nagaoka-shi, Niigata 940-8580 (JP)
(72) Inventor: YACHIDA,Takeshi, Niigate (JP); HIROKAWA,Takuro, Niigata (JP)
(74) Representative: Carpmaels & Ransford LLP
(86) International application number: PCT/JP2014/077560
(87) International publication number: WO 2015/060193

(56) References cited:
- EP-A1- 2 415 625
- WO-A1-2010/113788
- WO-A1-2011/055699
- JP-A- 2009 090 689
- JP-A- 2012 086 831
- JP-A- 2014 181 025
- US-A1- 2010 066 832
- US-A1- 2010 292 886

## Description

### TECHNICAL FIELD

The present invention relates to a vehicle information projection system which projects a predetermined information picture and makes a vehicle occupant view a virtual image on the front side of the vehicle, and a projection device used therefor.

### BACKGROUND ART

As a conventional vehicle information projection system, a system employing a head-up display (HUD) device which is a projection device as disclosed in Patent Literature 1 has been known. Such a HUD device projects an information picture on a windshield of a vehicle to make a viewer (an occupant) view a virtual image showing a predetermined information together with an actual view outside the vehicle. By adjusting the shape and the magnitude of the information picture showing guide routes of the vehicle, and position at which the information picture is displayed, and by displaying the information picture in association with a lane (a specific object) which is the actual view, the occupant can view a route with a small amount of gaze shift while viewing the actual view. US 2010/0066832 A1 discloses a head up display, which determines that a vehicle is vibrating and which corrects the position at which the picture of an object captured by a camera is projected in dependence of the vibration. US 2010/0292886 A1 discloses turn-by-turn graphical navigation instructions which are displayed on a windscreen head up display.

### CITATION LIST

### PATENT LITERATURE

Patent Literature 1: JP-A-2011-121401

### SUMMARY OF THE INVENTION

### PROBLEMS TO BE SOLVED BY THE INVENTION

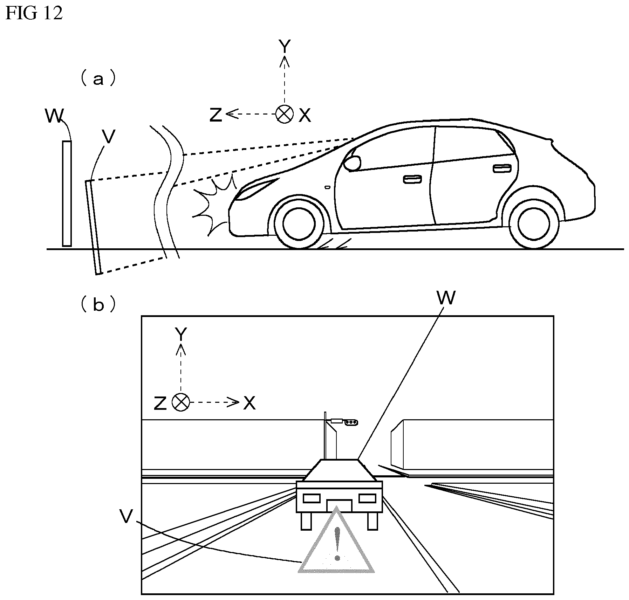

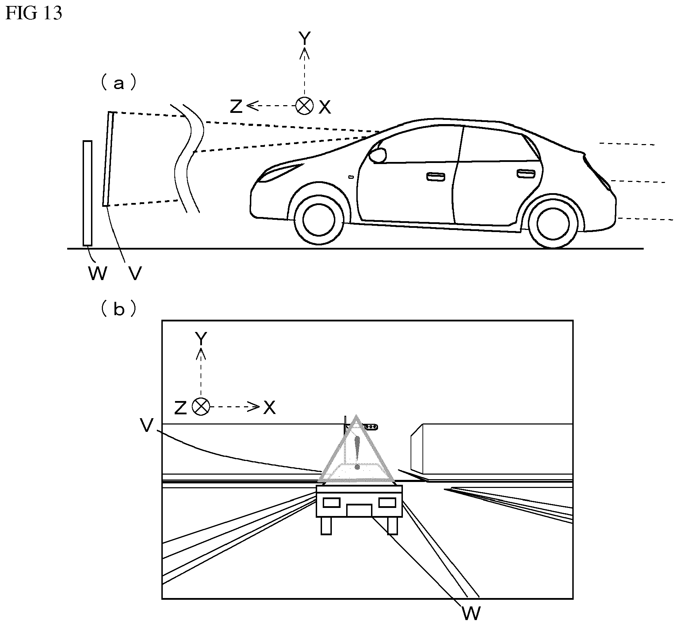

In the HUD device which makes a viewer view a virtual image corresponding to an actual view as in Patent Literature 1, however, the following possibilities exist. If the vehicle on which the HUD device is mounted decelerates rapidly as illustrated in FIG. 12(a), since the front side of the vehicle is inclined downward (in the negative direction of the Y-axis in FIG. 12) (forwardly inclined), the viewer may view a virtual image V as being tilted downward (in the negative direction of the Y-axis) with respect to a specific object W in outside scenery as illustrated in FIG. 12(b). If the vehicle accelerates rapidly as illustrated in FIG. 13(a), since the front side of the vehicle is inclined upward (in the positive direction of the Y-axis in FIG. 13) (backwardly inclined), the viewer may view the virtual image V as being tilted upward (in the positive direction of the Y-axis) with respect to the specific object W in the outside scenery as illustrated in FIG. 13(b), and a positional error (erroneous display) of the virtual image V with respect to the specific object W of the scenery outside the vehicle may cause the viewer to feel a sense of discomfort.

The present invention is proposed in consideration of these problems, and an object thereof is to provide a vehicle information projection system and a projection device capable of suppressing a positional error (erroneous display) of a virtual image displayed in correspondence to a specific object in scenery outside a vehicle so as to enable a viewer to recognize information without a sense of discomfort.

### MEANS FOR SOLVING THE PROBLEM

To achieve the above object, a vehicle information projection system and a projection device as set forth in appended claims 1 and 4 are provided. Further embodiments of the invention are disclosed in the dependent claims.

### EFFECT OF THE INVENTION

According to the present invention, a positional error (erroneous display) of a virtual image displayed in correspondence to a specific object in scenery outside a vehicle is suppressed so as to enable a viewer to recognize information without a sense of discomfort.

### BRIEF DESCRIPTION OF THE DRAWINGS

FIG. 1 is a diagram illustrating a configuration of a vehicle information projection system in a first embodiment of the present invention.
FIG. 2 is a diagram illustrating scenery which a vehicle occupant in the above-described embodiment views.
FIG. 3 is a diagram illustrating scenery which a vehicle occupant in the above-described embodiment views.
FIG. 4 is an operation flow diagram for adjusting a position of an image in the above-described embodiment.
FIG. 5 is a diagram illustrating a configuration of a HUD device in the above-described embodiment.
FIG. 6 is a diagram illustrating a configuration of the HUD device in above-described embodiment.
FIG. 7 is an operation flow diagram for adjusting a position of an image in a second embodiment.
FIG. 8 is a diagram illustrating scenery which the vehicle occupant views when a fourth embodiment is not employed.
FIG. 9 is a diagram illustrating scenery which the vehicle occupant views when the above-described embodiment is employed.
FIG. 10 is an operation flow diagram for adjusting a position of an image in a fifth embodiment.
FIG. 11 is a diagram illustrating a transition of a display in the above-described embodiment.
FIG. 12 is a diagram illustrating a problem of a related art.
FIG. 13 is a diagram illustrating a problem of a related art.

### MODE FOR CARRYING OUT THE INVENTION

### (First Embodiment)

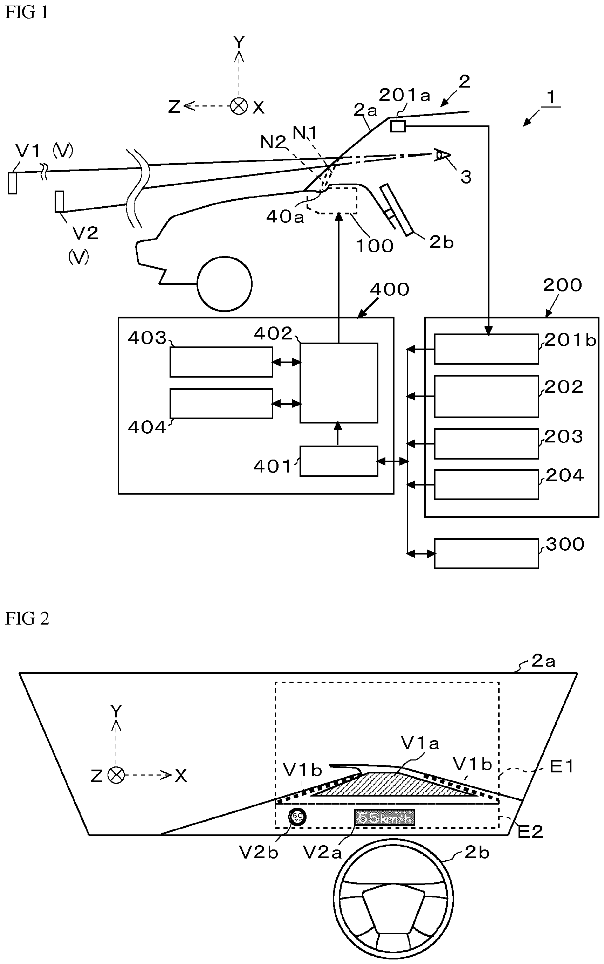

A first embodiment of a vehicle information projection system 1 of the present invention will be described with reference to FIGs. 1 to 6. Hereinafter, for the ease of understanding of a configuration of the vehicle information projection system 1, description is given suitably using X, Y and Z coordinates illustrated in FIG. 1 and other drawings. Here, an axis along a horizontal direction seen from an occupant 3 who views the virtual image V is defined as an X-axis, an axis along an up-down direction is defined as a Y-axis, and an axis crossing perpendicularly the X-axis and the Y-axis and along a gaze direction of the occupant 3 who views the virtual image V is defined as a Z-axis. Further, regarding the arrow direction indicating each of the X, Y and Z axes in the drawings, description is given suitably with the direction pointed by the arrow being + (positive) and the opposite direction being - (negative).

A system configuration of the vehicle information projection system 1 according to a first embodiment, forming part of the invention, is illustrated in FIG. 1. The vehicle information projection system 1 according to the present embodiment consists of a head-up display device (hereinafter, "HUD device") 100 which is a projection device which projects first display light N1 indicating a first virtual image VI and second display light N2 indicating a second virtual image V2 on a windshield 2a of a vehicle 2, and makes the occupant (the viewer) 3 of the vehicle 2 view the first virtual image VI and the second virtual image V2, an information acquisition unit 200 which acquires vehicle information about the vehicle 2, a vehicle outside condition around the vehicle 2, and the like, and a display controller 400 which controls display of the HUD device 100 based on information input from the information acquisition unit 200.

The HUD device 100 is provided with, in a housing 40, a first projection means 10 which emits the first display light N1, and a second projection means 20 which emits the second display light N2. The HUD device 100 emits the first display light N1 and the second display light N2 to a remote display area E1 and a vicinity display area E2 of the windshield 2a from a transmissive portion 40a provided in the housing 40. The first display light N1 reflected on the remote display area E1 of the windshield 2a has a relatively long focus distance as illustrated in FIG. 1, and makes the occupant 3 view the first virtual image V1 at a distant position from the occupant 3. The second display light N2 reflected on the windshield 2a has a focus distance shorter than that of the first virtual image VI, and makes the occupant 3 view the second virtual image V2 at a position closer to the occupant 3 than the first virtual image VI. In particular, the virtual image projected by the first projection means 10 (the first virtual image VI) is viewed as if it is located 15 m or longer from the occupant 3 (the focus distance is 15 m or longer), and the virtual images projected by the second projection means 20 (the second virtual image V2 and a later-described auxiliary virtual image V3) are viewed as if they are located about 2.5 m from the occupant 3.

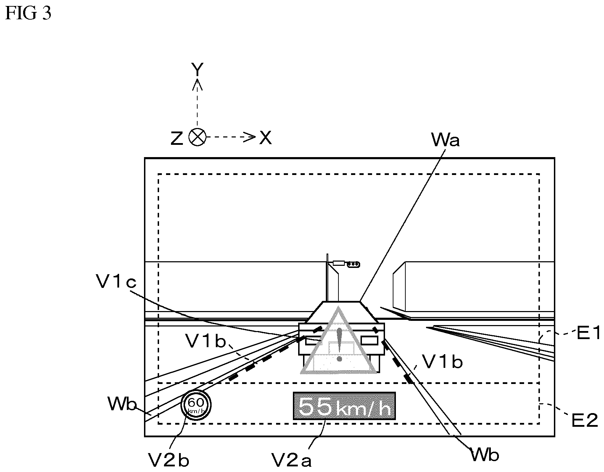

Hereinafter, the first virtual image V1 and the second virtual image V2 viewed by the occupant 3 will be described with reference to FIGs. 2 and 3. FIG. 2 is a diagram illustrating the first virtual image V1 and the second virtual image V2 projected on the windshield 2a that the occupant 3 views at the driver's seat of the vehicle 2. The first virtual image V1 and the second virtual image V2 are projected on the windshield 2a disposed above a steering 2b of the vehicle 2 (on the positive side of the Y-axis). The HUD device 100 in the present embodiment emits each of the first display light N1 and the second display light N2 so that an area in which the first virtual image V1 is displayed (the remote display area E1) is disposed above an area in which the second virtual image V2 is displayed (the vicinity display area E2). FIG. 3 is a diagram illustrating a collision alert picture V1c which is a display example of the later-described first virtual image V1.

The first virtual image V1 projected on the remote display area (the first display area) E1 of the windshield 2a is, for example, as illustrated in FIGs. 2 and 3, a guide route picture V1a in which a route to a destination is superposed on a lane outside the vehicle 2 (an actual view) to conduct route guidance, a white line recognition picture V1b superposed near a white line, which is recognized by a later-described stereoscopic camera 201a, to make the occupant 3 recognize existence of the white line to suppress lane deviation, or merely superposed near the white line to make the occupant 3 recognize existence of the white line when the vehicle 2 is to deviate from the lane, the collision alert picture V1c superposed near an object (e.g., a forward vehicle and an obstacle), which is recognized by the later-described stereoscopic camera 201a, existing on the lane on which the vehicle 2 is traveling, to warn the occupant 3 to suppress a collision, a forward vehicle lock picture (not illustrated) superposed on a vehicle recognized as a forward vehicle to make the occupant 3 recognize the forward vehicle that the vehicle 2 follows when an adaptive cruise control (ACC) system which controls the speed of the vehicle 2 to follow the forward vehicle is used, and a vehicle distance picture (not illustrated) which makes an index about a distance between the forward vehicle and the vehicle 2 be superposed on the lane between the forward vehicle and the vehicle 2, and makes the occupant recognize the vehicle distance. The first virtual image V1 is displayed in accordance with a specific object (e.g., the lane, the white line, the forward vehicle, and the obstacle) W in the actual view outside the vehicle 2.

The second virtual image V2 projected on the vicinity display area (the second display area) E2 of the windshield 2a is, for example, an operation condition picture V2a about an operation condition of the vehicle 2, such as speed information, information about the number of rotation, fuel efficiency information, and the like of the vehicle 2, output from a later-described vehicle speed sensor 204 or a vehicle ECU 300, a regulation picture V2b about regulation information based on a current position of the vehicle 2 obtained by recognizing the current position of the vehicle 2 from a later-described GPS controller 203 and reading the regulation information (e.g., a speed limit) based on the lane on which the vehicle 2 is currently traveling from the navigation system 202, and a vehicle warning picture (not illustrated) which makes the occupant 3 recognize abnormality of the vehicle 2. The second virtual image V2 is the picture not displayed in accordance with the specific object W in the actual view outside the vehicle 2.

The information acquisition unit 200 is provided with a forward information acquisition unit 201 which captures images in front of the vehicle 2 and estimates the situation ahead of the vehicle 2, a navigation system 202 which conducts route guidance of the vehicle 2, a GPS controller 203, and a vehicle speed sensor 204. The information acquisition unit 200 outputs information acquired by each of these components to the later-described display controller 400. Although a vehicle outside condition estimation means and a distance detection means described in the claims of the present application are constituted by the forward information acquisition unit 201, the navigation system 202, the GPS controller 203, and the like in the present embodiment, these are not restrictive if the situation in front of the vehicle 2 can be estimated. The situation in front of the vehicle 2 may be estimated by making communication between an external communication device, such as a millimeter wave radar and a sonar, or a vehicle information communication system, and the vehicle 2. A behavior detection means described in the claims of the present application is constituted by the forward information acquisition unit 201, the vehicle speed sensor 204, and the like in the present embodiment.

The forward information acquisition unit 201 acquires information in front of the vehicle 2, and is provided with The stereoscopic camera 201a which captures images in front of the vehicle 2, and a captured image analysis unit 201b which analyzes captured image data acquired by the stereoscopic camera 201a in the present embodiment.

The stereoscopic camera 201a captures the forward area including the road on which the vehicle 2 is traveling. When the captured image analysis unit 201b conducts image analysis of the captured image data acquired by the stereoscopic camera 201a by pattern matching, information about a road geometry (a specific target) (e.g., a lane, a white line, a stop line, a pedestrian crossing, a road width, the number of lanes, a crossing, a curve, and a branch), and information about an object on the road (a specific target) (a forward vehicle and an obstacle) are analyzable. Further, a distance between the captured specific object (e.g., a lane, a white line, a stop line, a crossing, a curve, a branch, a forward vehicle, and an obstacle) and the vehicle 2 is calculable.

That is, in the present embodiment, the forward information acquisition unit 201 outputs, to the display controller 400, the information about the road geometry (a specific object) analyzed from the captured image data captured by the stereoscopic camera 201a, information about an object (a specific object) on the road, and the information about the distance between the captured specific object and the vehicle 2.

The navigation system 202 is provided with a storage which stores map data, reads the map data near the current position from the storage based on position information from the GPS controller 203, determines a guide route, outputs information about the guide route to the display controller 400, and makes the guide route picture V1a and the like be displayed on the HUD device 100, thereby conducting route guidance to a destination set by the occupant 3. Further, the navigation system 202 outputs, to the display controller 400, a name and a type of a facility ahead of the vehicle 2 (a specific object), and a distance between the vehicle 2 and the facility with reference to the map data.

In the map data, information about roads (e.g., road widths, the number of lanes, crossings, curves, and branches), regulation information about road signs, such as speed limit, and information about each lane (a direction or destination of each lane) if a plurality of lanes exist are stored in association with position data. The navigation system 202 reads map data near the current position based on the position information from the GPS controller 203 and outputs the read map data to the display controller 400.

The GPS (Global Positioning System) controller 203 receives GPS signals from, for example, artificial satellites, calculates the position of the vehicle 2 based on the GPS signals, and outputs the calculated position of the vehicle to the navigation system 202.

The vehicle speed sensor 204 detects the speed of the vehicle 2, and outputs speed information of the vehicle 2 to the display controller 400. The display controller 400 displays the operation condition picture V2a showing the vehicle speed of the vehicle 2 on the HUD device 100 based on the speed information input from the vehicle speed sensor 204. Further, the later-described display controller 400 can obtain the acceleration of the vehicle 2 based on the speed information input from the vehicle speed sensor 204, estimate a behavior of the vehicle 2 from the calculated acceleration, and adjust the position of the first virtual image VI based on the behavior of the vehicle 2 (an image position adjustment process). Details of the "image position adjustment process" will be described later.

The vehicle ECU 300 is an ECU (Electronic Control Unit) which controls the vehicle 2 comprehensively, determines the information picture to be displayed on the HUD device 100 based on signals output from various sensors (not illustrated) and the like mounted on the vehicle 2, and outputs instruction data of the information picture to the later-described display controller 400, whereby the display controller 400 projects a desired information picture on the HUD device 100.

The display controller 400 controls operations of the first projection means 10, the second projection means 20, and an actuator 30a which are described later in the HUD device 100, and makes the first display light N1 and the second display light N2 be projected on predetermined positions of the windshield 2a. The display controller 400 is an ECU constituted by a circuit provided with a CPU (Central Processing Unit), memory, and the like, includes an input/output unit 401, a display control means 402, an image memory 403 and a storage 404, transmits signals among the HUD device 100, the information acquisition unit 200, and the vehicle ECU 300 by a CAN (Controller Area Network) bus communication and the like.

The input/output unit 401 is connected communicably with the information acquisition unit 200 and the vehicle ECU 300, and inputs, from the information acquisition unit 200, vehicle outside condition information indicating whether a specific object exists outside the vehicle 2, a type, a position, and the like of the specific object, vehicle behavior information indicating a behavior, such as speed, of the vehicle 2, distance information indicating a distance between the vehicle 2 and the specific object W outside the vehicle 2, and the like.

The display control means 402 reads picture data from the image memory 403 based on the vehicle outside condition information input from the information acquisition unit 200, generates first information picture K1 to be displayed on the first projection means 10 and second information picture K2 to be displayed on the second projection means 20, and outputs the generated pictures to the HUD device 100 (the first projection means 10 and the second projection means 20).

The display control means 402 includes a driver which drives display elements and a light source illuminating the display elements that a first display means 11 and a second display means 21 which are described later have, and the like. The display control means 402 makes the first display means 11 display the first information picture K1 and makes the second display means 21 display the second information picture K2. The display control means 402 can adjust luminance and brightness of the first information picture K1 (the first virtual image VI) and the second information picture K2 (the second virtual image V2) by controlling the display elements or the light source of the first display means 11 and the second display means 21, and can thereby adjust visibility of first virtual image V1 and second virtual image V2. Visibility (luminance, brightness) of these pictures is merely adjusted based on peripheral illuminance information of the occupant 3 input from an unillustrated illuminance sensor or manipulate signals from an unillustrated adjustment switch in conventional vehicle information projection systems. The display control means 402 according to the vehicle information projection system 1 of the present invention, however, lowers (including not displayed) the luminance and the brightness of the first virtual image V1 (the first information picture K1) corresponding to the specific object W apart from the vehicle 2 by a predetermined distance or longer when it is determined that the behavior of the vehicle 2 is large in the later-described "image position adjustment process."

In the generation of the first information picture K1, the display control means 402 determines the display form and the position to display based on the information about the road geometry input from the forward information acquisition unit 201, the information about the object on the road, and the information about the distance from the captured specific object, and generates the first information picture K1 so that the first virtual image V1 is viewed at a position corresponding to the specific object in the actual view (a branch to be route-guided, a lane, a forward vehicle and an obstacle). In particular, the display control means 402 generates, for example, the guide route picture V1a for conducting route guidance of the vehicle 2 based on the information about guide routes input from the navigation system 202, the white line recognition picture V1b which makes the viewer recognize existence of the lane based on vehicle forward information input from the forward information acquisition unit 201, and the collision alert picture V1c which warns the viewer of a forward vehicle or an obstacle. The display control means 402 outputs the thus-generated first information picture K1 to the first projection means 10, generates the operation condition picture V2a about the operation condition of the vehicle 2, such as speed information, and the regulation picture V2b about the regulation information, such as speed limit, and the like based on the information input from the information acquisition unit 200 or the vehicle ECU 300, and outputs the thus-generated second information picture K2 to the display control means 402.

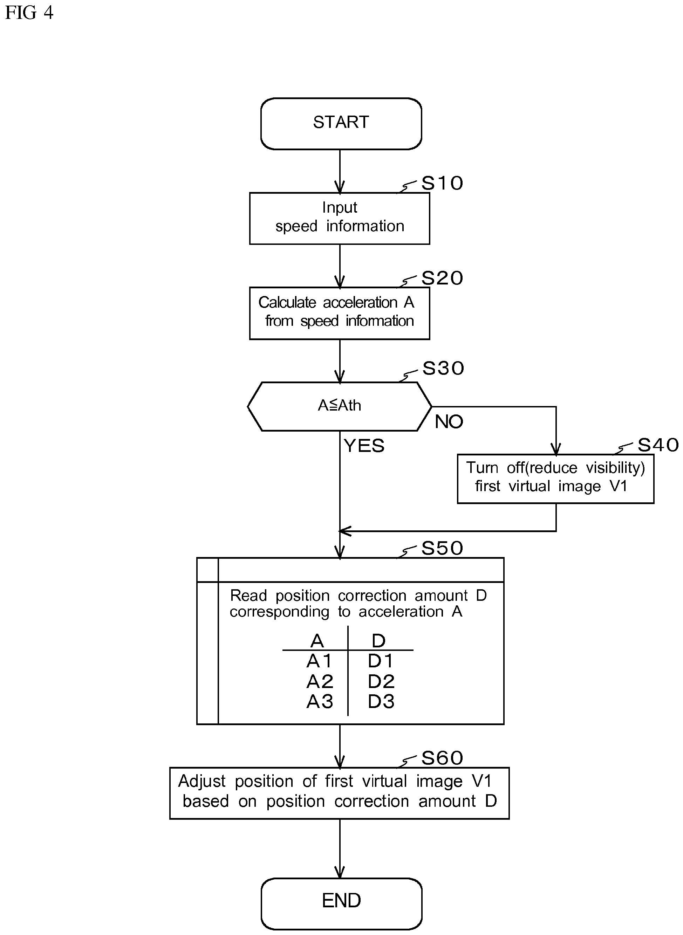

Further, the display control means 402 estimates the behavior of the vehicle 2, and adjusts the position at which the first virtual image V1 is viewed by the occupant 3 based on the behavior of the vehicle 2. Hereinafter, the "image position correction process" in the present embodiment will be described based on the operation flow diagram of FIG. 4.

First, in step S10, the display control means 402 inputs speed information (the vehicle behavior information) from the information acquisition unit 200 (vehicle speed sensor 204) at every predetermined time, and calculates acceleration A of the vehicle 2 from the temporal change in the speed information (step S20). Next, the display control means 402 compares the acceleration A calculated in step S20 with a threshold Ath previously stored in the storage 404 (step S30). If the acceleration A is greater than the threshold Ath (step S30: NO), in step S40, the display control means 402 makes the first virtual image V1 corresponding to the specific object W apart from the vehicle 2 by a predetermined distance or longer not to be displayed (reduce visibility), and the process proceeds to step S50. If the acceleration A is equal to or smaller than the threshold Ath (step S30: YES), in step S50, the display control means 402 reads a position correction amount D corresponding to the acceleration A calculated in step S20 among first image position correction table data previously stored in the storage 404, and adjusts the position of the first information picture K1 (the first virtual image V1) displayed by the later-described first projection means 10 based on the position correction amount D (step S60). As described above, the position can be adjusted by obtaining the acceleration based on the speed information from the vehicle speed sensor 204 mounted as a speed detector of a vehicle meter, and obtaining the position correction amount D for adjusting the position of the first information picture K1 (the first virtual image V1) from the acceleration, the position of the first virtual image V1 can be adjusted without the need of additional dedicated detection sensor. The display control means 402 controls the visibility of the first virtual image V1 to normal visibility when it determines that the behavior of the vehicle 2 is that in a normal traveling.

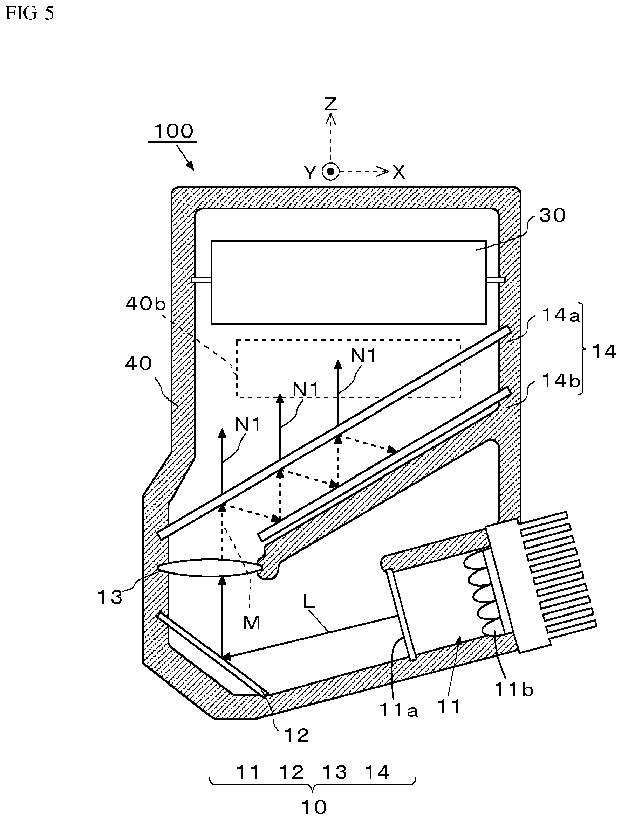

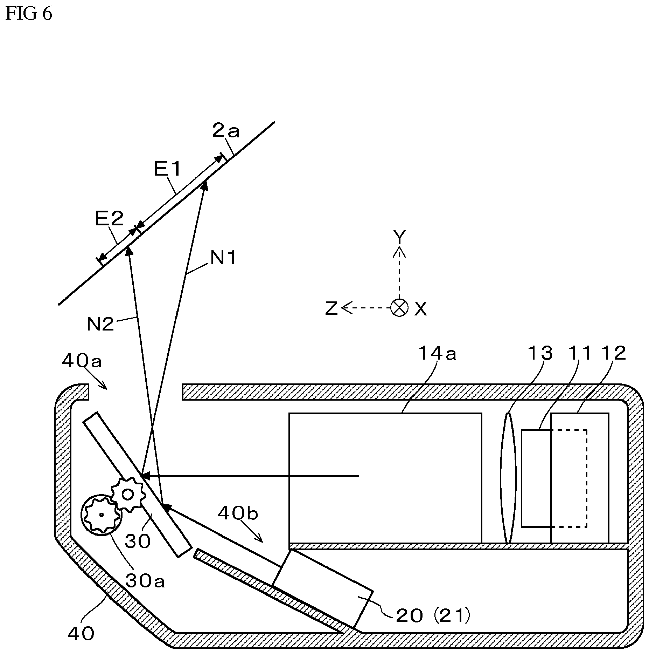

The system configuration of the vehicle information projection system 1 according to the present embodiment has been described. Hereinafter, an exemplary configuration of the HUD device 100 of the present embodiment will be described with reference to FIGs. 5 and 6. FIG. 5 is a schematic cross-sectional view of the HUD device 100 in the present embodiment along an XZ plane, and FIG. 6 is a schematic cross-sectional view of the HUD device 100 in the present embodiment along a YZ plane.

As described above, the HUD device 100 in the present embodiment is provided with the first projection means 10 which projects the first display light N1 related to the first virtual image V1 on the remote display area (the first display area) E1 of the windshield 2a, the second projection means 20 which projects the second display light N2 related to the second virtual image V2 on the vicinity display area (the second display area) E2 of the windshield 2a, the concave mirror 30 which directs the first display light N1 and the second display light N2 toward the windshield 2a, and the housing 40.

The first projection means 10 is provided with, as illustrated in FIG. 5, the first display means 11 which displays the first information picture K1 on a display surface, a reflecting mirror 12, a collimator lens 13, and parallel mirrors 14, emits the first display light N1 indicating the first information picture K1 toward the later-described concave mirror 30. The first display light N1 is projected (reflected) on a predetermined area of the windshield 2a by the concave mirror 30, and the first virtual image V1 is made to be viewed by the occupant 3 in the remote display area E1 of the windshield 2a.

The first display means 11 is configured by a display element 11a formed by a liquid crystal display (LCD) or the like, and a light source 11b which illuminates the display element 11a from the back, and the like. The first display means 11 displays a desired first information picture K1 on the display surface of the display element 11a based on signals output from the display controller 400. Instead of the transmissive LCD, the first display means 11 may be configured by a light emitting type organic EL display, a reflective type DMD (Digital Micromirror Device) display, a reflective or transmissive LCOS (registered trademark: Liquid Crystal On Silicon) display, and the like.

In the first projection means 10, image light L indicating the first information picture K1 displayed by the first display means 11 is reflected on the reflecting mirror 12 and enters the collimator lens 13. The image light L is made parallel by the collimator lens 13 (the collimator lens 13 emits parallel beams M). The parallel beams M emitted from the collimator lens 13 enter the parallel mirrors 14. Among the parallel mirrors 14, one of the reflective surface is a semi-transmissive mirror 14a which reflects a part of incident light and transmits a part of incident light as the first display light N1, the other of the reflective surface is a reflective mirror 14b which only reflects light. The parallel beams M incident on the parallel mirrors 14 are repeatedly reflected on the parallel mirrors 14, and a part of the parallel beams M is emitted as a plurality of beams of the first display light N1 from the parallel mirrors 14 (a plurality of beams of the first display light N1 pass through the semi-transmissive mirror 14a). Since the first display light N1 is light that is made parallel by the collimator lens 13, when the occupant 3 views the first display light N1 with both eyes, the first information picture K1 displayed by the first display means 11 is viewed as if it is located distant from the occupant 3 (the first virtual image V1). In the first projection means 10 of the present embodiment, since the first display light N1 can be reproduced in the X-axis direction and emitted by causing the parallel beam M emitted from the collimator lens 13 to be reflected between the parallel mirrors 14 multiple times, the first virtual image V1 can be viewed in a wide range even if the gaze of both eyes of the occupant 3 move in the X-axis direction.

The second projection means 20 is provided with the second display means 21 which displays the second information picture K2 based on signals input from the display controller 400. As illustrated in FIG. 6, the second display means 21 emits, from an opening 40b of the later-described housing 40, the second display light N2 indicating the second information picture K2 toward the later-described concave mirror 30. The second display light N2 is projected (reflected) on a predetermined area of the windshield 2a by the concave mirror 30, and the second virtual image V2 is made to be viewed by the occupant 3 in the vicinity display area E2 of the windshield 2a.

The concave mirror 30 is configured by forming a reflection film on a surface of a base made of synthetic resin material by, for example, vapor deposition or other means. The concave mirror 30 reflects the first display light N1 emitted from the first projection means 10 and the second display light N2 emitted from the second projection means 20 toward the windshield 2a. The first display light N1 (the second display light N2) reflected on the concave mirror 30 penetrates the transmissive portion 40a of the housing 40 and is directed toward the windshield 2a. The first display light N1 (the second display light N2) which has arrived at and reflected on the windshield 2a displays the first virtual image V1 related to the first information picture K1 in the remote display area E1 at a front position of the windshield 2a, and displays the second virtual image V2 related to the second information picture K2 in the vicinity display area E2. Therefore, the HUD device 100 can make the occupant 3 view both the first virtual image VI (the second virtual image V2) and outside scenery which actually exists in front of the windshield 2a (including the specific object W) and the like. The concave mirror 30 has a function as a magnifying glass, which magnifies the first information picture K1 (the second information picture K2) displayed by the first display means 11 (the second display means 21) and reflects the picture toward the windshield 2a. That is, the first virtual image V1 (the second virtual image V2) viewed by the occupant 3 is a magnified image of the first information picture K1 (the second information picture K2) displayed by the first display means 11 (the second display means 21).

The housing 40 houses the first projection means 10, the second projection means 20, and the concave mirror 30, each of which is positioned and fixed. The housing 40 is provided with the transmissive portion 40a through which the first display light N1 and the second display light N2 reflected on the concave mirror 30 are emitted toward the windshield 2a. The housing 40 is also provided with the opening 40b which transmits, toward the concave mirror 30, the first display light N1 emitted by the second projection means 20.

The foregoing is the configuration of the HUD device 100 in the present embodiment, but the HUD device used for the vehicle information projection system 1 of the present invention is not limited to the example described above. The first projection means 10 may be disposed to have an optical path longer than that of light emitted by the second projection means 20, whereby the first virtual image V1 projected by the first projection means 10 may be viewed at a distant place.

Although the focus distance of the first virtual image V1 is set longer than that of the second virtual image V2 in the above-described embodiment, this is not restrictive. The focus distance of the first virtual image V1 may be substantially equal to that of the second virtual image V2. In this case, the first information picture K1 related to the first virtual image V1 to be displayed in the first display area E1 and the second information picture K2 related to the second virtual image V2 to be displayed in the second display area E2 may be generated by a common display means (e.g., only the second projection means 20 in the above-described embodiment).

The projection target is not limited to the windshield 2a of the vehicle 2, but may be a tabular half mirror, and a combiner configured by, for example, a hologram element.

The first virtual image V1 and the second virtual image V2 do not necessarily have to be projected on the same projection target: one of them may be projected on the windshield 2a and the other may be projected on the above-described combiner.

As described above, the vehicle information projection system 1 in the first embodiment is provided with the HUD device 100 which includes the information acquisition unit 200 which estimates the position of the specific object W outside the vehicle 2 (the forward information acquisition unit 201, the navigation system 202, and the GPS controller 203), the first display means 11 (the second display means 21) which generates the first information picture K1 (the second information picture K2) about the specific object W, the concave mirror 30 which directs the information picture generated by the first display means 11 (the second display means 21) toward the windshield 2a in front of the occupant 3 of the vehicle 2, and the actuator 30a which adjusts the position at which the information picture is projected by driving the concave mirror 30 depending on the position of the specific object W estimated by the information acquisition unit 200, and the information acquisition unit 200 (the vehicle speed sensor 204) which detects the behavior of the vehicle 2, calculates the acceleration from the vehicle speed detected by the information acquisition unit 200, estimates the behavior of the vehicle 2 from the acceleration, and corrects the position at which the first information picture K1 (the second information picture K2) is projected based on the behavior of the vehicle 2. With this configuration, a positional error (erroneous display) of the first virtual image V1 displayed corresponding to a specific object W outside the vehicle 2 can be controlled, and the occupant 3 of the vehicle 2 can be made to recognize the first virtual image V1 without a sense of discomfort information.

The picture position adjustment means which adjusts the position at which the first information picture K1 (the first virtual image V1) is projected in a first embodiment is the actuator 30a which can rotate the concave mirror 30 based on the vehicle behavior detected by the vehicle speed sensor 204, which can easily adjust the position at which the first information picture K1 (the first virtual image V1) is projected. At this time, although the display position of the second virtual image V2 which is not displayed corresponding to the specific object W is also moved with the rotation of the concave mirror 30, when the display controller 400 changes the position of the second information picture K2 on the display surface displayed by second display means 21 corresponding to the rotation of the concave mirror 30 (driving of the actuator 30a), the relative position at which the second virtual image V2 is viewed with respect to the windshield 2a is not changed, whereby the occupant 3 can stably view the second virtual image V2. An adjustment amount of the position of the second information picture K2 on the display surface displayed by the second display means 21 is stored previously in the storage 404 in association with the amount of rotation of the concave mirror 30 (the driving amount of the actuator 30a). The position of the second information picture K2 can be adjusted promptly by reading the adjustment amount.

In the vehicle information projection system 1 of the first embodiment, if the vehicle behavior satisfies predetermined conditions, the display controller 400 lowers the visibility of the first virtual image V1 with respect to the specific object W apart from the vehicle 2 by a predetermined distance or longer among the first virtual images V1. That is, by lowering the visibility of the first virtual image V1 corresponding to the specific object W located at the position distant from the vehicle 2 of which positional error between the specific object W and the first virtual image V1 becomes larger when the posture of the vehicle 2 is inclined forward and backward by the vehicle behavior, confusion of the occupant 3 resulting from the sudden large change in position of the first virtual image V1 can be reduced. Further, even if an error of the position correction of the first virtual image V1 resulting from the positional error between the specific object W and the first virtual image V1 which becomes larger has become greater, the occupant 3 can be made less easily feel a sense of discomfort by making the positional error between the specific object W and the first virtual image V1 difficult to be viewed by the occupant 3. Further, by lowering the visibility of the first virtual image V1 with respect to the specific object W apart from the vehicle 2 by a predetermined distance or longer, the visibility of the first virtual image V1 corresponding to a specific object W located at a short distance becomes relatively higher, whereby the occupant 3 can be warned especially of the specific object W located at a short distance.

In the vehicle information projection system 1 in the first embodiment, the display controller 400 controls the visibility of the first virtual image V1 depending on the distance between the vehicle 2 and the specific object W and, in an emergency case where the behavior of the vehicle 2 is large, the distance between the vehicle 2 and the specific object W can be recognized promptly by the difference in the visibility of the first virtual image V1.

The present invention is not limited by the above-described embodiment and the drawings. Modification (including deletion of components) can be made suitably without changing the scope of the present invention, which is defined by the appended claims. Hereinafter, an example of a modification will be described.

### (Second Embodiment)

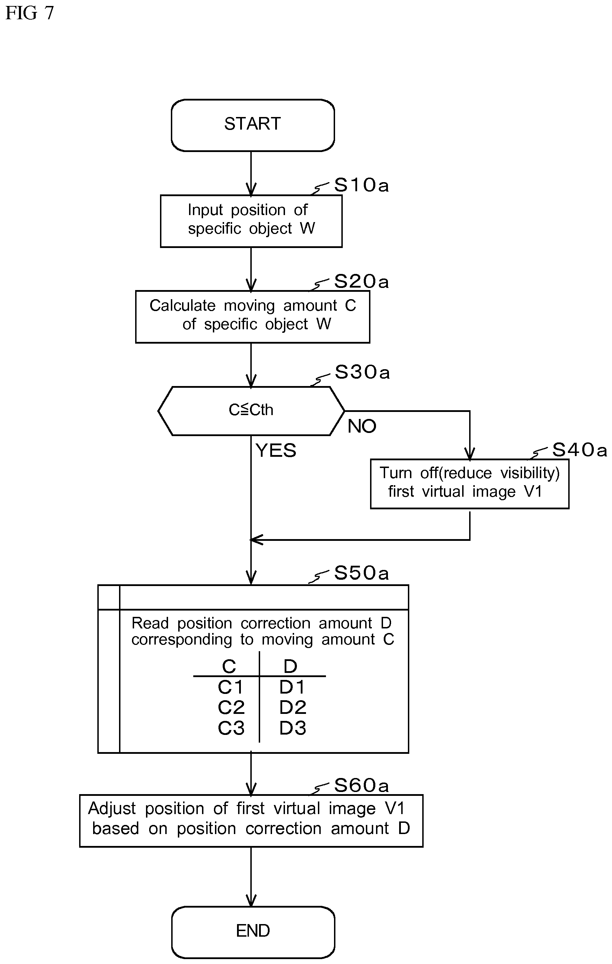

Although the behavior of the vehicle 2 is estimated by obtaining the acceleration of the vehicle 2 from the vehicle speed information of the vehicle speed sensor 204 in the above-described embodiment, this is not restrictive: the behavior of the vehicle 2 may be estimated based on a temporal shift of the position of the specific object W captured by the stereoscopic camera 201a. In particular, the "image position adjustment process" is executed based on the operation flow diagram of FIG. 7.

First, in step S10a, the display control means 402 inputs position information (the vehicle behavior information) of the specific object W from the forward information acquisition unit 201 (the stereoscopic camera 201a) at every predetermined time, and calculates a moving amount C of the specific object W from the temporal change of the position information (step S20a). The moving amount C of the specific object W is the moving amount in the Y-axis direction, and is the moving amount in the up-down direction in the image capturing direction of the stereoscopic camera 201a. Inclination of the vehicle 2 in the Y-axis direction can be estimated from the moving amount C of the specific object W. Next, the display control means 402 compares the moving amount C calculated in step S20a with a threshold Cth previously stored in the storage 404 (step S30a). If the moving amount C is larger than the threshold Cth (step S30a: NO), in step S40a, the display control means 402 makes the first virtual image V1 corresponding to the specific object W located over a predetermined distance from the vehicle 2 not displayed (reduce visibility), and the process proceeds to step S50a. If the moving amount C is equal to or smaller than the threshold Cth (step S30a: YES), in step S50a, the display control means 402 reads a position correction amount D corresponding to the moving amount C calculated in step S20a among second image position correction table data previously stored in the storage 404, and Adjusts the position of the first information picture K1 (the first virtual image V1) displayed by the later-described first projection means 10 based on the position correction amount D (step S60a). In this manner, the position of the first virtual image V1 can be corrected accurately by correcting the position of the first virtual image V1 based on the positional error of the specific object W captured by the stereoscopic camera 201a.

### (Third Embodiment)

The picture position adjustment means which adjusts the position at which the first information picture K1 (the first virtual image V1) is projected in the above-described embodiment is configured by the actuator 30a which rotates the concave mirror (the relay optical system) 30 which is the reflective optical member based on the vehicle behavior, and the display controller 400 which controls the actuator 30a. However, the display controller 400 may adjust the position of the first information picture K1 (the first virtual image V1) projected on the windshield 2a by adjusting the position of the first information picture K1 on the display surface of the first display means 11. In particular, the first display means 11 can display the first information picture K1 in a normal display area which is smaller compared to the displayable area, the concave mirror 30 (the relay optical system) can direct the image to be displayed on the displayable area including the normal display area toward the windshield 2a, the display controller 400 can adjust the display position of the first information picture K1 in the first display means 11, and moves the display position of the first information picture K1 in the first display means 11 out of the normal display area based on the detected vehicle behavior.

### (Fourth Embodiment)

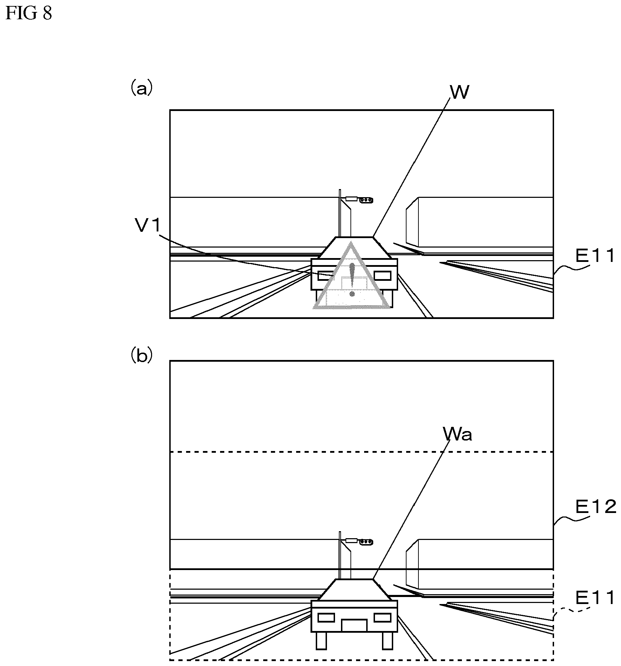

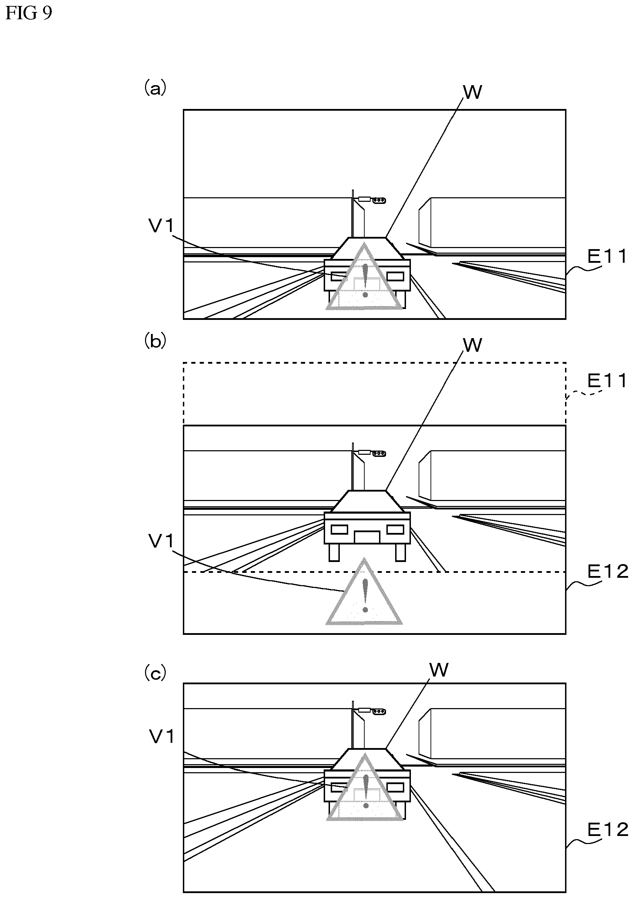

Hereinafter, a fourth embodiment of the present invention will be described with reference to FIGs. 8 and 9. FIG. 8 is a diagram illustrating scenery which the occupant 3 views when the present embodiment is not employed. FIG. 9 is a diagram illustrating scenery which the occupant 3 views when the present embodiment is employed. In these diagrams, for the ease of viewing, the second display area E2 and the first virtual image V1 are not illustrated. First, problems to be caused when the fourth embodiment of the present invention is not employed will be described. For example, there is a problem that, as illustrated in FIG. 8(a), if the vehicle 2 is stopping while displaying the first virtual image V1 corresponding to the specific object W near the end portion (a lower end) of the first display area E11 of the windshield 2a, and then the vehicle 2 accelerates rapidly, the vehicle 2 is inclined backward and the first display area E12 is shifted upward (in the positive direction of the Y-axis) with respect to the specific object W, whereby the first virtual image V1 cannot be displayed to correspond to the specific object W. In the fourth embodiment of the present invention, however, the problems described above can be solved by adjusting the position at which the first information picture K1 (the first virtual image V1) is projected by the actuator 30a which rotates the concave mirror (the relay optical system) 30, the first display means 11 which adjusts the position of the first information picture K1 on the display surface, and the display controller 400 which controls the actuator 30a and the first display means 11.

The display controller 400 in the fourth embodiment first recognizes at which area in the first display area E11 the first virtual image V1 is displayed. If it is determined that the area in which the first virtual image V1 is displayed is an area of which position cannot be adjusted to a position corresponding to the specific object W depending on the behavior of the vehicle 2 (the first virtual image V1 is located near the end portion of the first display area E11) as illustrated in FIG. 9(a), the display controller 400 drives the actuator 30a to move, as illustrated in FIG. 9(b), the position of the first display area E11 in the windshield 2a downward so that the position of the specific object W in the first display area E11 is not located near the end portion of the first display area E11 (move from the position of the first display area E11 to the position of the first display area E12 in FIG. 9(b)). Then, as illustrated in FIG. 9(c), the display controller 400 adjusts the position of the first virtual image V1 to the position corresponding to the specific object W by adjusting the position of the first information picture K1 on the display surface of the first display means 11. With this configuration, in the state of FIG. 9(c), since a space of which position is adjustable even if the vehicle 2 accelerates rapidly is provided below the first virtual image V1, the display controller 400 is capable of adjusting the position of the first information picture K1 downward (in the negative direction of the Y-axis) on the display surface of the first display means 11, whereby the position of the first virtual image V1 can be adjusted promptly. Since it is expected that the first virtual image V1 may be shifted above the specific object W (in the positive direction of the Y-axis) due to rapid deceleration when the vehicle 2 is traveling (at a high speed), when the vehicle 2 is traveling (at a high speed), the display controller 400 may desirably secure a space to enable position adjustment above the first virtual image V1 in the method described above.

### (Fifth Embodiment)

If it is determined that the behavior of the vehicle 2 is large in a later-described "image position adjustment process," a display control means 402 according to the vehicle information projection system 1 of a fifth embodiment lowers luminance and brightness (including not displayed) of a first information picture K1 (a first virtual image V1) corresponding to a specific object, and switches the display of the first information picture K1 corresponding to the specific object located within a predetermined distance from the vehicle 2 into a substitution information picture K3 (the first virtual image V1) of a different display mode.

In the generation of the first information picture K1, the display control means 402 determines the display form and the position to display based on the information about the road geometry input from the forward information acquisition unit 201, the information about the object on the road, and the information about the distance from the captured specific object, and generates the first information picture K1 so that the first virtual image V1 is viewed at a position corresponding to the specific object in the actual view (a lane, a white line Wb, and a forward vehicle Wc). In particular, the display control means 402 generates, for example, the white line recognition picture K1b which makes the viewer recognize existence of the lane based on vehicle forward information input from the forward information acquisition unit 201, and the collision alert picture K1c which warns the viewer of a forward vehicle Wc or an obstacle. The display control means 402 outputs the thus-generated first information picture K1 to the first projection means 10, generates an operation condition picture K2a about the operation condition of the vehicle 2, such as speed information, and the regulation picture K2b about the regulation information, such as speed limit, and the like based on the information input from the information acquisition unit 200 or the vehicle ECU 300, and outputs the thus-generated second information picture K2 to the display control means 402.

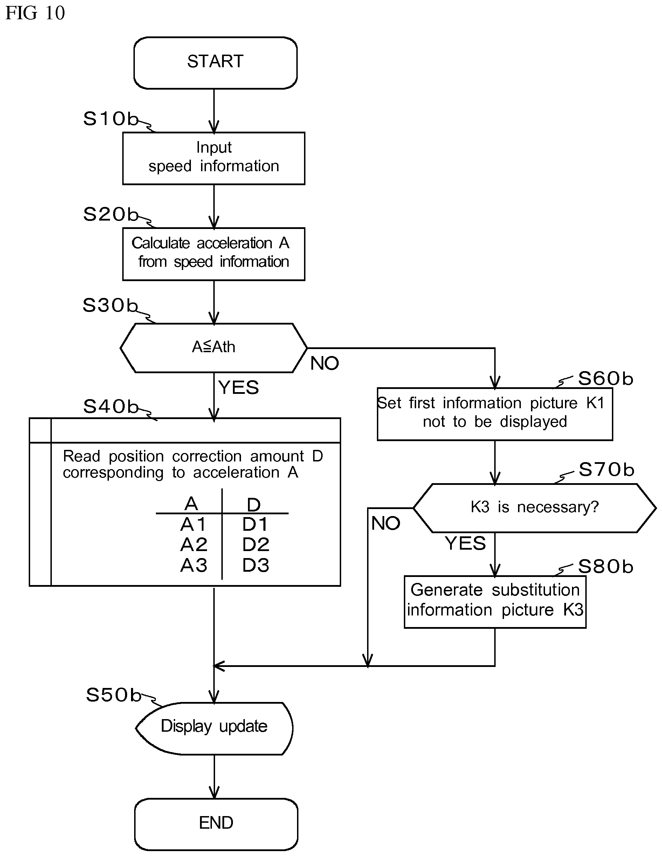

Further, the display control means 402 estimates the behavior of the vehicle 2, and adjusts the position at which the first virtual image V1 is viewed by the occupant 3, the visibility, and the display mode based on the behavior of the vehicle 2. Hereinafter, the "image position correction process" in the present embodiment will be described based on the operation flow diagram of FIG. 10.

First, in step S10b, the display control means 402 inputs speed information (the vehicle behavior information) from the information acquisition unit 200 (vehicle speed sensor 204) at every predetermined time, and calculates acceleration A of the vehicle 2 from the temporal change in the speed information (step S20b).

Next, the display control means 402 compares the acceleration A calculated in step S20b with a threshold Ath previously stored in the storage 404 (step S30b). Further, if the acceleration A is equal to or smaller than the threshold Ath (step S30b: YES), in step S40, the display control means 402 reads a position correction amount D corresponding to the acceleration A calculated in step S20b among first image position correction table data previously stored in the storage 404, and adjusts the position of the first information picture K1 (the first virtual image V1) displayed by the later-described first projection means 10 based on the position correction amount D and displays (step S50b). As described above, the position can be adjusted by obtaining the acceleration A based on the speed information from the vehicle speed sensor 204 mounted as a speed detector of a vehicle meter, and obtaining the position correction amount D for adjusting the position of the first information picture K1 (the first virtual image V1) from the acceleration A, the position of the first virtual image V1 can be adjusted without the need of additional dedicated detection sensor.

If the acceleration A is larger than the threshold Ath (step S30b: NO), in step S60b, the display control means 402 sets the first information picture K1 (the first virtual image V1) corresponding to the specific object W not to be displayed (including lowering of visibility). Then, the display control means 402 determines in step S70b whether display of the substitution information picture K3 is necessity. In particular, the display control means 402 determines that the substitution information picture K3 about the collision alert picture K1c that is highly dangerous is necessary.

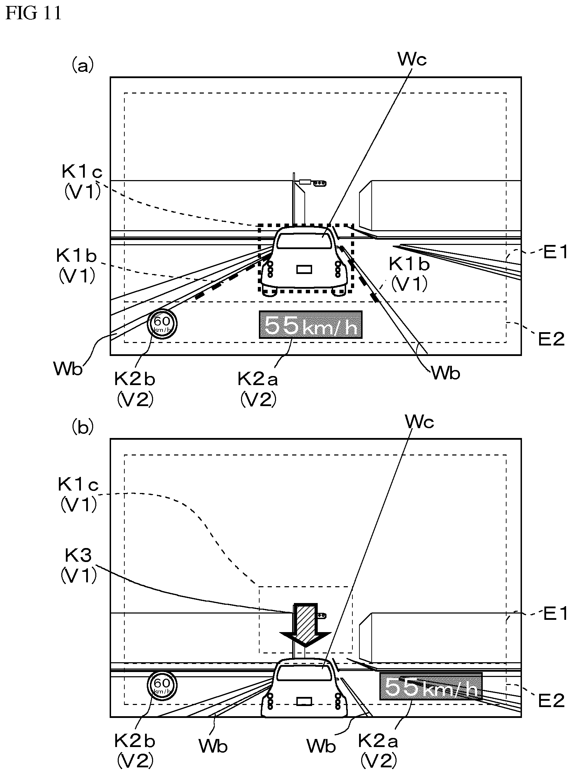

If the substitution information picture K3 is necessary (step S70b: YES), the display control means 402 generates image data of the substitution information picture K3. The substitution information picture K3 is an arrow-shaped image as illustrated in FIG. 11(b), and the indicating direction of the arrow is the direction in which the specific object (the forward vehicle Wc) has moved relatively to the first display area F1. That is, if the vehicle 2 accelerates rapidly and the vehicle 2 is inclined backward, and the forward vehicle Wc has shifted downward (the negative direction of the Y-axis) relatively to the first display area E1, the substitution information picture K3 is generated to indicate downward (the negative direction of the Y-axis) where the forward vehicle Wc is located.

Then, in step S50b, under the control of the display control means 402, the first display means 11 hides the first information picture K1 displayed till then and displays the substitution information picture K3 which is needed.

In any of the cases in which the position adjustment of the first information picture K1 is conducted in step S50b, the first information picture K1 is not displayed, or the substitution information picture K3 is displayed, the display control means 402 continuously displays the second information picture K2 (the operation condition picture K2a, the regulation picture K2b, and the like) other than the first information picture K1 viewed as the first virtual image V1 at the position corresponding to the specific object in the actual view. With this configuration, even if the posture of the vehicle 2 changes, the vehicle 2 can continuously recognize the information in the specific area (inside the vicinity display area E2). Further, if there is a possibility that the specific object is viewed in a superposed manner with the second information picture K2 depending on the vehicle posture of the vehicle 2, the display control means 402 may move the display position of the second information picture K2 within the vicinity display area E2 in step S50b.

An example of the above-described image position correction process will be described with reference to FIG. 11. FIG. 11(a) illustrates scenery to be viewed by the occupant 3 when the vehicle posture of the vehicle 2 is normal. FIG. 11(b) illustrates scenery to be viewed by the occupant 3 when the vehicle posture of the vehicle 2 is inclined backward due to rapid acceleration and the like and the image position correction process has been executed. In the normal state illustrated in FIG. 11(a), the white line recognition picture K1b showing the white line Wb and the collision alert picture K1c showing the forward vehicle Wc are viewed as the first virtual image V1, and the operation condition picture K2a and the regulation picture K2b are viewed as the second virtual image V2. If the vehicle 2 accelerates rapidly and the vehicle 2 is inclined backward, and the specific object has shifted downward (the negative direction of the Y-axis) relatively to the first display area E1, the substitution information picture K3 is displayed to indicate downward (the negative direction of the Y-axis) where the forward vehicle Wc is located as illustrated in FIG. 11(b). The white line recognition picture K1b showing the white line Wb and the collision alert picture K1c showing the forward vehicle Wc are not displayed, and the operation condition picture K2a and the regulation picture K2b are continuously displayed. Since there is a possibility that the operation condition picture K2a is viewed in a superposed manner with the forward vehicle Wc as the specific object is shifted downward relatively to the first display area E1 (on the vicinity display area E2 side) due to a posture change of the vehicle 2, the display position of the operation condition picture K2a is moved.

As described above, the vehicle information projection system 1 in the fifth embodiment is provided with the a HUD device 100 which includes the information acquisition unit 200 which estimates the position of the specific object outside the vehicle 2 (the forward information acquisition unit 201, the navigation system 202, and the GPS controller 203), the first display means 11 (the second display means 21) which generates the first information picture K1 (the second information picture K2) about a specific object, a concave mirror 30 which directs the display image generated by the first display means 11 (the second display means 21) toward the windshield 2a in front of the occupant 3 of the vehicle 2, and an actuator 30a which adjusts the position at which the display image is projected by driving the concave mirror 30 depending on the position of the specific object estimated by the information acquisition unit 200, and the information acquisition unit 200 (the vehicle speed sensor 204) which detects the behavior of the vehicle 2. The vehicle information projection system 1 calculates acceleration from the vehicle speed detected by the information acquisition unit 200, estimates the behavior of the vehicle 2 from the acceleration, and changes the first information picture K1 (the second information picture K2) into a different display image based on the behavior of the vehicle 2. If the relative position between the first virtual image V1 and the specific object viewed by the occupant 3 is shifted from a specific positional relationship due to a change in the vehicle posture, the substitution information picture K3 which is different from the normal display image (the first information picture K1) in shape can be displayed. Therefore, a head-up display device with a commercial value capable of preventing the occupant 3 from recognizing positional error of the first virtual image V1, and not providing the occupant 3 with a sense of discomfort caused by a positional error of the first virtual image V1.

Further, although the first display light N1 emitted by the first projection means 10 and the second display light N2 emitted by the second projection means 20 are directed toward the windshield 2a by the common concave mirror (the relay optical system) 30 in the HUD device 100 of the above-described embodiment, the first display light N1 and the second display light N2 may be directed toward the windshield 2a by independent relay optical systems.

Although the HUD device 100 of the above-described embodiment includes a plurality of projection means, i.e., the first projection means 10 and the second projection means 20, the second projection means 20 may be omitted.

Although the position at which the first information picture K1 (the first virtual image V1) is projected is adjusted by rotating the concave mirror (the relay optical system) 30 which is a reflective optical member based on the vehicle behavior in the above-described embodiment, this is not restrictive: the position at which the first information picture K1 (the first virtual image V1) is projected may be adjusted by rotating and/or moving a refracting optical member, such as a lens, to refract the first display light N1 emitted from the first projection means 10.

The display controller 400 may calculate the position correction amount D of the first virtual image VI by estimating the behavior of the vehicle 2 from output signals of a gyro sensor, a suspension stroke sensor, a brake pedal sensor, an accelerator pedal sensor, and the like besides those described above.

### INDUSTRIAL APPLICABILITY

The vehicle information projection system of the present invention is applicable to, for example, a vehicle-use display system which projects an image on a windshield of a vehicle and the like and displays a virtual image.

### DESCRIPTION OF REFERENCE NUMERALS

1 vehicle information projection system
100 HUD device (projection device)
10 first projection means
11 first display means
20 second projection means
21 second display means
30 concave mirror (relay optical system)
30a actuator (picture position adjustment means)
200 information acquisition unit (vehicle outside condition estimation means)
400 display controller (picture position adjustment means)
E1 remote display area (first display area)
E2 vicinity display area (second display area)
K1 first information picture
K2 second information picture
K3 substitution information picture
L image light
N1 first display light
N2 second display light
V1 first virtual image
V2 second virtual image

## Claims

1. A vehicle information projection system comprising:
a vehicle outside condition estimation means (200) configured to estimate a position of a specific object (W) located outside a vehicle on a road;
a projection device (100) which includes:
a display device (11) configured to generate a first information picture (K1) based on the position of the specific object (W) input from the vehicle outside condition estimation means (200) so that a virtual image (V1) is viewed at a position superimposed on the specific object (W),
a relay optical system (30) configured to project a display light (N1) of the first information picture (K1) generated by the display device (11) toward a projection target ahead of an occupant of the vehicle and cause the information picture (K1) to be visually recognized as the virtual image (V1) in a display area (E1), and
a display controller (400) configured to adjust a position at which the virtual image (V1) is projected depending on the position of the specific object (W) estimated by the vehicle outside condition estimation means (200); and
a behavior detection means (201, 204) configured to detect a behavior of the vehicle, wherein the behavior detection means is capable of detecting acceleration of the vehicle,
wherein the display controller (400) corrects the position at which the virtual image (V1) is projected based on the acceleration of the vehicle detected by the behavior detection means (201, 204), and **characterized in that**
the display controller lowers the visibility of the virtual image (V1) when the vehicle is distant from the specific object (W) by a predetermined distance or longer, and displays an arrow image (K3) wherein the indicating direction of the arrow is the direction in which the specific object (W) has moved relatively to the display area (E1) due to the vehicle acceleration exceeding an acceleration threshold.

2. The vehicle information projection system according to claim 1, wherein
the display controller (400) includes an actuator (30a) capable of moving and/or rotating the relay optical system (30) based on the vehicle behavior detected by the behavior detection means (201, 204).

3. The vehicle information projection system according to any one of claims 1 to 2, wherein the behavior detection means (201, 204) includes an image capturing means (201) capable of capturing an image of the specific object (W) in the scenery outside the vehicle, and detects the vehicle behavior based on a position of the specific object (W) captured by the image capturing means (201).

4. A projection device for use in a vehicle information projection system comprising a vehicle outside condition estimation means (200) configured to estimate a position of a specific object (W) located outside a vehicle on a road and a behavior detection means (201, 204) configured to detect a behavior of the vehicle and being capable of detecting acceleration of the vehicle, the projection device comprising:
a display device (11) configured to generate a first information picture (K1) based on the position of the specific object (W) input from the vehicle outside condition estimation means (200) so that a virtual image (V1) is viewed at a position superimposed on the specific object
a relay optical system (30) configured to project a display light (N1) of the first information picture (K1) generated by the display device (11) toward a projection target ahead of an occupant of the vehicle and cause the information picture (K1) to be visually recognized as the virtual image (V1) in a display area (E1), and
a display controller (400) configured to adjust a position at which the virtual image (V1) is projected depending on the position of the specific object (W) estimated by the vehicle outside condition estimation means (200),
wherein the display controller (400) corrects the position at which the virtual image (V1) is projected based on the acceleration of the vehicle detected by the behavior detection means (201, 204), and **characterized in that**
the display controller lowers the visibility of the virtual image (V1) when the vehicle is distant from the specific object (W) by a predetermined distance or longer, and displays an arrow image (K3) wherein the indicating direction of the arrow is the direction in which the specific object (W) has moved relatively to the display area (E1) due to the vehicle acceleration exceeding an acceleration threshold.

## Patentansprüche

1. Projektionssystem für Fahrzeuginformationen, das Folgendes umfasst:
Fahrzeug-Außenbedingungsschätzmittel (200), das dafür ausgelegt ist, eine Position eines spezifischen Objekts (W) zu schätzen, das sich außerhalb eines Fahrzeugs auf einer Straße befindet;
Projektionsvorrichtung (100), die Folgendes beinhaltet:
Anzeigevorrichtung (11), die dafür ausgelegt ist, ein erstes Informationsbild (K1) basierend auf der Position des spezifischen Objekts (W) zu erzeugen, das vom Fahrzeug-Außenbedingungsschätzmittel (200) eingegeben wird, so dass ein virtuelles Bild (V1) an einer Position angezeigt wird, die dem spezifischen Objekt (W) überlagert ist,
optisches Zwischensystem (30), das dafür ausgelegt ist, ein Anzeigelicht (N1) des ersten Informationsbildes (K1), das von der Anzeigevorrichtung (11) erzeugt wird, auf ein Projektionsziel vor einem Insassen des Fahrzeugs zu projizieren und zu bewirken, dass das Informationsbild (K1) visuell als das virtuelle Bild (V1) in einem Anzeigebereich (E1) erkannt wird, und
Anzeigesteuerung (400), die dafür ausgelegt ist, eine Position einzustellen, an der das virtuelle Bild (V1) projiziert wird, abhängig von der Position des spezifischen Objekts (W), die durch das Fahrzeug-Außenbedingungsschätzmittel (200) geschätzt wird; und
Verhaltenserfassungsmittel (201, 204), das dafür ausgelegt ist, ein Verhalten des Fahrzeugs zu erfassen, wobei das Verhaltenserfassungsmittel dafür geeignet ist, die Beschleunigung des Fahrzeugs zu erfassen,
wobei die Anzeigesteuerung (400) die Position korrigiert, an der das virtuelle Bild (V1) projiziert wird, basierend auf der Beschleunigung des Fahrzeugs, die durch das Verhaltenserfassungsmittel (201, 204) erfasst wird, und
**dadurch gekennzeichnet, dass**
die Anzeigesteuerung die Sichtbarkeit des virtuellen Bildes (V1) verringert, wenn das Fahrzeug um einen vorbestimmten Abstand oder weiter vom spezifischen Objekt (W) entfernt ist, und ein Pfeilbild (K3) anzeigt, wobei die Anzeigerichtung des Pfeils die Richtung ist, in der sich das spezifische Objekt (W) aufgrund dessen, dass die Fahrzeugbeschleunigung einen Beschleunigungsschwellenwert überschreitet, relativ zum Anzeigebereich (E1) bewegt hat.

2. Projektionssystem für Fahrzeuginformationen nach Anspruch 1, wobei
die Anzeigesteuerung (400) ein Stellglied (30a) beinhaltet, das in der Lage ist, das optische Zwischensystem (30) basierend auf dem vom Verhaltenserfassungsmittel (201, 204) erfassten Fahrzeugverhalten zu bewegen und/oder zu drehen.

3. Projektionssystem für Fahrzeuginformationen nach einem der Ansprüche 1 bis 2, wobei das Verhaltenserfassungsmittel (201, 204) ein Bilderfassungsmittel (201) beinhaltet, das in der Lage ist, ein Bild des spezifischen Objekts (W) in der Landschaft außerhalb des Fahrzeugs zu erfassen, und das Fahrzeugverhalten basierend auf einer Position des spezifischen Objekts (W) erfasst, das vom Bilderfassungsmittel (201) erfasst wird.

4. Projektionsvorrichtung zur Verwendung in einem Projektionssystem für Fahrzeuginformationen, umfassend ein Fahrzeug-Außenbedingungsschätzmittel (200), das dafür ausgelegt ist, eine Position eines spezifischen Objekts (W) zu schätzen, das sich außerhalb eines Fahrzeugs auf einer Straße befindet, und ein Verhaltenserfassungsmittel (201, 204), das dafür ausgelegt ist, ein Verhalten des Fahrzeugs zu erfassen und in der Lage ist, die Beschleunigung des Fahrzeugs zu erfassen, wobei die Projektionsvorrichtung Folgendes umfasst:
Anzeigevorrichtung (11), die dafür ausgelegt ist, ein erstes Informationsbild (K1) basierend auf der Position des spezifischen Objekts (W) zu erzeugen, das vom Fahrzeug-Außenbedingungsschätzmittel (200) eingegeben wird, so dass ein virtuelles Bild (V1) an einer Position angezeigt wird, die dem spezifischen Objekt überlagert ist,
optisches Zwischensystem (30), das dafür ausgelegt ist, ein Anzeigelicht (N1) des ersten Informationsbildes (K1), das von der Anzeigevorrichtung (11) erzeugt wird, auf ein Projektionsziel vor einem Insassen des Fahrzeugs zu projizieren und zu bewirken, dass das Informationsbild (K1) visuell als das virtuelle Bild (V1) in einem Anzeigebereich (E1) erkannt wird, und
Anzeigesteuerung (400), die dafür ausgelegt ist, eine Position einzustellen, an der das virtuelle Bild (V1) projiziert wird, abhängig von der Position des spezifischen Objekts (W), die durch das Fahrzeug-Außenbedingungsschätzmittel (200) geschätzt wird,
wobei die Anzeigesteuerung (400) die Position korrigiert, an der das virtuelle Bild (V1) projiziert wird, basierend auf der Beschleunigung des Fahrzeugs, die durch das Verhaltenserfassungsmittel (201, 204) erfasst wird, und
**dadurch gekennzeichnet, dass**
die Anzeigesteuerung die Sichtbarkeit des virtuellen Bildes (V1) verringert, wenn das Fahrzeug um einen vorbestimmten Abstand oder weiter vom spezifischen Objekt (W) entfernt ist, und ein Pfeilbild (K3) anzeigt, wobei die Anzeigerichtung des Pfeils die Richtung ist, in der sich das spezifische Objekt (W) aufgrund dessen, dass die Fahrzeugbeschleunigung einen Beschleunigungsschwellenwert überschreitet, relativ zum Anzeigebereich (E1) bewegt hat.

## Revendications

1. Système de projection d'informations de véhicule comprenant :
un moyen d'estimation de condition extérieure de véhicule (200) configuré pour estimer une position d'un objet spécifique (W) situé à l'extérieur d'un véhicule sur une route ;
un dispositif de projection (100) qui comprend :
un dispositif d'affichage (11) configuré pour générer une première image d'informations (K1) en se basant sur la position de l'objet spécifique (W) entrée depuis le moyen d'estimation de condition extérieure de véhicule (200) de telle sorte qu'une image virtuelle (V1) soit vue à une position superposée sur l'objet spécifique (W),
un système optique de relais (30) configuré pour projeter une lumière d'affichage (N1) de la première image d'informations (K1) générée par le dispositif d'affichage (11) vers une cible de projection devant un occupant du véhicule et pour provoquer une reconnaissance visuelle de l'image d'informations (K1) en tant qu'image virtuelle (V1) dans une zone d'affichage (E1), et
un dispositif de commande d'affichage (400) configuré pour ajuster une position à laquelle l'image virtuelle (V1) est projetée en fonction de la position de l'objet spécifique (W) estimée par le moyen d'estimation de condition extérieure de véhicule (200) ; et
un moyen de détection de comportement (201, 204) configuré pour détecter un comportement du véhicule, dans lequel le moyen de détection de comportement est capable de détecter une accélération du véhicule,
dans lequel le dispositif de commande d'affichage (400) corrige la position à laquelle l'image virtuelle (V1) est projetée en se basant sur l'accélération du véhicule détectée par le moyen de détection de comportement (201, 204), et **caractérisé en ce que** le dispositif de commande d'affichage réduit la visibilité de l'image virtuelle (V1) lorsque le véhicule est distant de l'objet spécifique (W) d'une distance prédéterminée ou plus importante, et affiche une image de flèche (K3) la direction indiquée de la flèche étant la direction dans laquelle l'objet spécifique (W) s'est déplacé relativement par rapport à la zone d'affichage (E1) en raison de l'accélération du véhicule dépassant un seuil d'accélération.

2. Système de projection d'informations de véhicule selon la revendication 1, dans lequel
le dispositif de commande d'affichage (400) comprend un actionneur (30a) capable de déplacer et/ou de faire tourner le système optique de relais (30) en se basant sur le comportement de véhicule détecté par le moyen de détection de comportement (201, 204).

3. Système de projection d'informations de véhicule selon l'une quelconque des revendications 1 et 2, dans lequel le moyen de détection de comportement (201, 204) comprend un moyen de capture d'image (201) capable de capturer une image de l'objet spécifique (W) dans le paysage à l'extérieur du véhicule, et détecte le comportement de véhicule en se basant sur une position de l'objet spécifique (W) capturée par le moyen de capture d'image (201).

4. Dispositif de projection destiné à être utilisé dans un système de projection d'informations de véhicule comprenant un moyen d'estimation de condition extérieure de véhicule (200) configuré pour estimer une position d'un objet spécifique (W) situé l'extérieur d'un véhicule sur une route et un moyen de détection de comportement (201, 204) configuré pour détecter un comportement du véhicule et qui est capable de détecter une accélération du véhicule, le dispositif de projection comprenant :
un dispositif d'affichage (11) configuré pour générer une première image d'informations (K1) en se basant sur la position de l'objet spécifique (W) entrée depuis le moyen d'estimation de condition extérieure de véhicule (200) de telle sorte qu'une image virtuelle (V1) soit vue à une position superposée sur l'objet spécifique,
un système optique de relais (30) configuré pour projeter une lumière d'affichage (N1) de la première image d'informations (K1) générée par le dispositif d'affichage (11) vers une cible de projection devant un occupant du véhicule et pour provoquer une reconnaissance visuelle de l'image d'informations (K1) en tant qu'image virtuelle (V1) dans une zone d'affichage (E1), et
un dispositif de commande d'affichage (400) configuré pour ajuster une position à laquelle l'image virtuelle (V1) est projetée en fonction de la position de l'objet spécifique (W) estimée par le moyen d'estimation de condition extérieure de véhicule (200),
dans lequel le dispositif de commande d'affichage (400) corrige la position à laquelle l'image virtuelle (V1) est projetée en se basant sur l'accélération du véhicule détectée par le moyen de détection de comportement (201, 204), et **caractérisé en ce que** le dispositif de commande d'affichage réduit la visibilité de l'image virtuelle (V1) lorsque le véhicule est distant de l'objet spécifique (W) d'une distance prédéterminée ou plus importante, et affiche une image de flèche (K3) la direction indiquée de la flèche étant la direction dans laquelle l'objet spécifique (W) s'est déplacé relativement par rapport à la zone d'affichage (E1) en raison de l'accélération du véhicule dépassant un seuil d'accélération.
